(19)

**Europäisches Patentamt**

**European Patent Office**

**Office européen des brevets**

(11) **EP 4 617 985 A1**

(12) **EUROPEAN PATENT APPLICATION**

(43) Date of publication:
**17.09.2025 Bulletin 2025/38**

(21) Application number: **25162481.3**

(22) Date of filing: **10.03.2025**

(51) International Patent Classification (IPC):
**G06Q 30/0201** (2023.01)     **G06Q 30/0601** (2023.01)

(52) Cooperative Patent Classification (CPC):
**G06Q 30/0629; G06Q 30/0201; G06Q 30/0631**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.03.2024 IN 202421017957**

(71) Applicant: **Tata Consultancy Services Limited Maharashtra (IN)**

(72) Inventors:
• **VASUDEVAN, Bagya Lakshmi**
  **600097 Chennai (IN)**
• **ANAND, Amrita**
  **201303 Noida (IN)**
• **TANDON, Sabina**
  **400601 Mumbai (IN)**
• **SARASWAT, Kunika**
  **201303 Noida (IN)**
• **PATWARDHAN, Manasi Samarth**
  **411057 Pune (IN)**
• **PATIDAR, Mayur**
  **201309 Noida (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR IDENTIFYING ALTERNATIVE PRODUCTS**

(57) This disclosure relates generally to a method and system for identifying alternative products from competitor products having closer similarity to a retailer product. State-of-art methods for alternative product identification based on collaborative filtering often yield inappropriate matches as they do not consider context relevance. Moreover, due to the large size of dataset, such methods require more computation time. While making a comparison of retailer product with the competitor product, a context aware comparison as well as achieving sizable dataset is not yet achieved. The present disclosure addresses these problems through a method of processing metadata of the retailer product and the competitor products to derive feature importance score. The processing results in a filtered data set comprising unique retailer-competitor product pairs. The filtered data is then processed by a machine learning algorithm to identify alternative products based on closest similarity with the retailer product and accordingly ranked.

FIG. 3

EP 4 617 985 A1

**Description**

CROSS-REFERENCE TO RELATED APPLICATIONS AND PRIORITY

The present application claims priority from Indian patent application no. 202421017957, filed on March 12, 2024.

TECHNICAL FIELD

The disclosure herein generally relates to automation in consumer market and, more particularly, to systems and methods for identifying and recommending alternative products to assist consumers and retailers.

BACKGROUND

In today's competitive environment, particularly in a business scenario, almost every company wants to know about their competitors and in more detail like geography of the competitors, domain of the competitors as well as the offerings especially, in terms of products. However, it is a timing consuming and laborious task to find and watch the competitor, especially, in the globalization environment, where the competitors comes from all over the world and the players and their products in the market are continually changing. In the present information age, due to high end computing and the internet enabled world, vast amounts of information are being generated every day. The vast amount of information is processed every day, and the vast amount of information is analyzed every day. Therefore, the amount of information, as well as the number of goods and services, available to individuals is increasing exponentially. This increase in items and information is occurring across all domains. An individual attempting to find useful information, or to decide between competing goods and services, is often faced with a bewildering selection of sources and choices. **In** a retail scenario, the modern retail store environment has become much more competitive as a large number of brands are available for the same product with the same or similar product attributes. When a product is out of stock or no longer available, customers may leave the store without making a purchase. Similar possibility is valid in e-commerce scenario. When a product of choice is not available, customers may leave the e-commerce store website. To grab the customers, the retailers are heavily dependent on technological tools and invest in competitive intelligence that can benefit the retailer with the real-time information of competitor products and the associated attributes. Retailers prefer to stand ahead in competition, and they just fall short on focus on their product portfolio; they are interested to know the product portfolio of the competitors. The retailers prefer to adopt technological tools that can provide deep level comparison of retailer product vs competitor products. At the same time, customers have become more aware, informed as well as scientific when it comes to selecting alternative/ substitute product in the absence of the product they are looking for. The e-commerce engines provide information such as product specifications, product characteristics, product ratings, product reviews, price comparisons, and product attributes such as performance or quality found in product related websites, retail websites, consumer websites, blogs, comments in various social media, and other similar product information sources. Websites for stores may include built-in product comparisons or platform specific analysis tools that a potential customer may utilize to provide a comparison of features and capabilities for a number of similar products in a product category to find an optimum product for their specific needs. However, due to extensive use of content-based filtering and collaborative filtering, e-commerce search engines present plenty of options that leave the retailer or customers in a confusion stage in choosing the appropriate substitute. Identifying the most suitable alternative product, whether in "brick and mortar" retail shops or in e-commerce platforms, poses specific challenges. The "brick and mortar" retail shops lack detailed product description available readily for the customer or to the retailer that may result in inefficient time management. Further, generating recommendations on e-ecommerce platforms requires techniques such as collaborative filtering which requires huge computation time and the results in a large number of alternatives leaving retailer confused.

SUMMARY

Embodiments of the present disclosure present technological improvements as solutions to one or more of the above-mentioned technical problems recognized by the inventors in conventional systems. For example, in one embodiment, a method for identifying alternative products from competitors having close similarity to the retailer products is provided. The method includes receiving metadata of a retailer product wherein the metadata comprises a plurality of retailer product attributes for a domain of interest. The product metadata comprises a plurality of product attributes captured from product label like product name, quantity, category, description of ingredients, nutrition information, usage instructions, packaging date, expiry date, batch number, lot number, images, allergen information and so on. The method further includes receiving metadata of a plurality of competitor products from the domain with product attributes comparable to the plurality of retailer product attributes. The method further includes translating metadata of the retailer product and the competitor products to obtain translated metadata comprising product attributes obtained from product label. Since metadata captured from retailer product and various competitor products collected from different parts of the world, it can be in multiple languages and need to be translated in one language so that further standardization can be performed uniformly across retailer and product metadata. The method further includes standardizing translated metadata of the retailer product and the competitor products by segregating product attributes into (a) a product name, (b) a product category, and (c) a product description. The translated metadata of retailer product and the competitor products is standardized to facilitate uniform cataloging of the translated metadata. The method further includes arranging the standardized metadata by mapping the retailer product with each of the competitor product to create a plurality of retailer-competitor product pairs. This is a pre-processing of the standardized metadata for machine learning by mapping the retailer product with each of the competitor products to create a plurality of the retailer-competitor product pairs. The mapping of the retailer product by linking the retailer product ID with each of the competitor product ID to arrange data with ID-ID mapping. The method further includes filtering the plurality of retailer-competitor product pairs using binary classification to obtain filtered data, wherein binary classification segregates the retailer-competitor product pairs as (a) a positive dataset and (b) a negative dataset. The positive dataset comprises the pairs that have lexical similarity between the texts. This kind of pre-processing helps dropping-off the data which is not relevant for the machine learning algorithm. Therefore, a filtered dataset comprising only of positive dataset has retailer-competitor product pairs. Due to such filtering, dataset size reduces the execution time and results in efficient computation. The method further includes calculating lexical similarity of the plurality of the retailer-competitor product pairs of the filtered dataset. Lexical similarity provides a measure of the similarity of two texts based on the intersection of the word sets of same or different languages. The method further includes calculating semantic similarity of the plurality of the retailer-competitor product pairs of the filtered dataset. Semantic relatedness of texts is computed by comparing the vectors in the space defined by the concepts, for example, using the cosine metrics. BERT phrase model is used to calculate semantic similarity between corresponding retailer and competitor products. The method further includes obtaining feature importance scores for each retailer-competitor product pairs using a pre-trained ML model wherein the model combines lexical similarity, and the semantic similarity score associated with each retailer-competitor product pair. The feature importance scores are obtained for each retailer-competitor product pairs using a pre-trained ML model wherein the model combines a Term frequency-inverse document frequency (TFIDF) score, and cosine similarity score associated with each retailer-competitor product pair. The random forest algorithm is used in deriving the feature importance score. The method further includes assigning, the weighted scores to each of the plurality of retailer product attributes and each of the plurality of competitor product attributes to obtain combined weighted scores of the retailer-competitor product pairs. The method further includes normalizing the combined weighted scores of the retailer-competitor product pairs. Normalization involves scaling the feature importance scores of each retailer-competitor product pairs to bring them to a common range. Normalization eliminates the effects of the variation in the scale of the datasets. Finally, the solution includes identifying a plurality of alternative products for the retailer product by ranking the retailer-competitor product pairs based on normalized scores of each retailer-competitor product pair. Based on normalized weighted scores, suitable alternative products from competitors are identified.

In another aspect, a system for identifying alternative products from competitors having close similarity to the retailer products is provided. The system includes at least one memory storing programmed instructions; one or more Input /Output (I/O) interfaces; and one or more hardware processors, an alternative product identification model via data collection engine, scoring engine, and ranking engine, operatively coupled to a corresponding at least one memory, wherein the system is configured to receive, metadata of a retailer product wherein the metadata comprises a plurality of retailer product attributes for a domain of interest. The product metadata comprises a plurality of product attributes captured from product label like product name, quantity, category, description of ingredients, usage instructions, packaging date, expiry date, batch number, lot number, images, allergen information and so on. Further, the system is configured to receive metadata of a plurality of competitor products from the domain with product attributes comparable to the plurality of retailer product attributes. Further, the system is configured to translate metadata of the retailer product and the competitor products to obtain translated metadata comprising product attributes obtained from product label. Since metadata captured from retailer product and various competitor products collected from different parts of the world, it can be in multiple languages and need to be translated in one language so that further standardization can be performed uniformly across retailer and product metadata. Further, the system is configured to standardize translated metadata of the retailer product and the competitor products by segregating product attributes into (a) a product name, (b) a product category, and (c) a product description. The translated metadata of retailer product and the competitor products is standardized to facilitate uniform cataloging of the translated metadata. Further, the system is configured to arrange the standardized metadata by mapping the retailer product with each of the competitor products to create a plurality of retailer-competitor product pairs. This is a pre-processing of the standardized metadata for machine learning by mapping the retailer product with each of the competitor products to create the plurality of the retailer-competitor product pairs. The mapping of the retailer product by linking the retailer product ID with each of the competitor product ID to arrange data with ID-ID mapping. Further, the system is configured to filter the plurality of retailer-competitor product pairs using binary classification to obtain filtered data, wherein binary classification segregates the retailer-competitor product pairs as (a) a positive dataset and (b) a negative dataset. The positive dataset comprises the pairs that have lexical similarity between the texts. This kind of pre-processing helps drop-off the data which is not relevant for the machine learning algorithm. Therefore, a filtered dataset comprising only of positive dataset has retailer-competitor product pairs. Due to such filtering, dataset size reduces the execution time and results in efficient computation. Further, the system is configured to calculate lexical similarity of the plurality of retailer-competitor product pairs of the filtered dataset. Lexical similarity provides a measure of the similarity of two texts based on the intersection of the word sets of same or different languages. Further, the system is configured to calculate semantic similarity of the plurality of the retailer-competitor product pairs of the filtered dataset. Semantic relatedness of texts is computed by comparing the vectors in the space defined by the concepts, for example, using the cosine metrics. BERT phrase model is used to calculate semantic similarity between corresponding retailer and competitor products. Further, the system is configured to obtain feature importance scores for each retailer-competitor product pairs using a pre-trained ML model wherein the model combines lexical similarity, and the semantic similarity score associated with each retailer-competitor product pair. The feature importance scores are obtained for each retailer-competitor product pairs using a pre-trained ML model wherein the model combines a Term frequency-inverse document frequency (TFIDF) score, and cosine similarity score associated with each retailer-competitor product pair. The random forest algorithm is used in deriving the feature importance score. Further, the system is configured to assign weighted scores to each of the plurality of retailer product attributes and each of the plurality of competitor product attributes to obtain combined weighted scores of the retailer-competitor product pairs. Normalization involves scaling the feature importance scores of each retailer-competitor product pairs to bring them to a common range. Normalization eliminates the effects of the variation in the scale of the datasets. Further, the system is configured to identify a plurality of alternative products for the retailer product by ranking the retailer-competitor product pairs based on normalized scores of each retailer-competitor product pair. Based on normalized weighted scores, suitable alternative products from competitors are identified.

In yet another aspect, a computer program product including a non-transitory computer-readable medium having embodied therein a computer program for identifying alternative products from competitors having close similarity to the retailer products is provided. The computer readable program, when executed on a computing device, causes the computing device to receive metadata of a retailer product wherein the metadata comprises a plurality of retailer product attributes for a domain of interest. The product metadata comprises a plurality of product attributes captured from product label like product name, quantity, category, description of ingredients, usage instructions, packaging date, expiry date, batch number, lot number, images and so on. The computer readable program, when executed on a computing device, causes the computing device to receive metadata of a plurality of competitor products from the domain with product attributes comparable to the plurality of retailer product attributes. The computer readable program, when executed on a computing device, causes the computing device to translate metadata of the retailer product and the competitor products to obtain translated metadata comprising product attributes obtained from product label. Since metadata captured from retailer product and various competitor products collected from different parts of the world, it can be in multiple languages and need to be translated in one language so that further standardization can be performed uniformly across retailer and product metadata. The computer readable program, when executed on a computing device, causes the computing device to standardize translated metadata of the retailer product and the competitor products by segregating product attributes into (a) a product name, (b) a product category, and (c) a product description. The translated metadata of retailer product and the competitor products is standardized to facilitate uniform cataloging of the translated metadata. The computer readable program, when executed on a computing device, causes the computing device to arrange the standardized metadata by mapping the retailer product with each of the competitor product to create retailer-competitor product pairs. This is a pre-processing of the standardized metadata for machine learning by mapping the retailer product with each of the competitor products to create a plurality of retailer-competitor product pairs. The mapping of the retailer product by linking the retailer product ID with each of the competitor product ID to arrange data with ID-ID mapping. The computer readable program, when executed on a computing device, causes the computing device to filter the plurality of retailer-competitor product pairs using binary classification to obtain filtered data, wherein binary classification segregates the retailer-competitor product pairs as (a) a positive dataset and (b) a negative dataset. The positive dataset comprises the pairs that have lexical similarity between the texts. This kind of pre-processing helps dropping-off the data which is not relevant for the machine learning algorithm. Therefore, a filtered dataset comprising only of positive dataset has the plurality of retailer-competitor product pairs. Due to such filtering, dataset size reduces the execution time and results in efficient computation. The computer readable program, when executed on a computing device, causes the computing device to calculate lexical similarity of the plurality of the retailer-competitor product pairs of the filtered dataset. Lexical similarity provides a measure of the similarity of two texts based on the intersection of the word sets of same or different languages. The computer readable program, when executed on a computing device, causes the computing device to calculate semantic similarity of the plurality of retailer-competitor product pairs of the filtered dataset. Semantic relatedness of texts is computed by comparing the vectors in the space defined by the concepts, for example, using the cosine metrics. BERT phrase model is used to calculate semantic similarity between corresponding retailer and competitor products. The computer readable program, when executed on a computing device, causes the computing device to obtain feature importance scores for each retailer-competitor product pairs using a pre-trained ML model wherein the model combines lexical similarity, and the semantic similarity score associated with each retailer-competitor product pair. The feature importance scores is obtained for each retailer-competitor product pair using a pre-trained ML model wherein the model combines a Term frequency-inverse document frequency (TFIDF) score, and cosine similarity score associated with each retailer-competitor product pair. The random forest algorithm is used in deriving the feature importance score. The computer readable program, when executed on a computing device, causes the computing device to assign weighted scores to each of the plurality of retailer product attributes and each of the plurality of competitor product attributes to obtain combined weighted scores of the retailer-competitor product pairs. The computer readable program, when executed on a computing device, causes the computing device to normalize the weighted scores of the retailer-competitor product pairs. Normalization involves scaling the feature importance scores of each retailer-competitor product pairs to bring them to a common range. Normalization eliminates the effects of the variation in the scale of the datasets. The computer readable program, when executed on a computing device, causes the computing device to identify a plurality of alternative products for the retailer product by ranking the retailer-competitor product pairs based on normalized scores of each retailer-competitor product pair. Based on normalized weighted scores, suitable alternative products from competitors are identified.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of system 100 for identifying alternative product as a recommendation in the absence of the retailer product, according to some embodiments of the present disclosure.
FIG. 2 is a diagram that illustrates an example of the system implemented in a commercial environment with an alternative product identification model 110, according to some embodiments of the present disclosure.
FIG. 3 is a flow diagram illustrating end-to-end pipeline product recommendations by the alternative product identification model comprising a set of ML modules, according to some embodiments of the present disclosure.
FIGS. 4A-4C shows a flow diagram of an illustrative method 400 for identifying alternative products as a recommendation in the absence of the retailer product, according to some embodiments of the present disclosure.
FIG. 5 illustrates confusion matrix with quadrant wise distribution of predicted labels and true labels of approved products and non-approved products respectively, according to some embodiments of the present disclosure.
FIGS. 6A-6D shows semantic similarity-based box plot statistics for product category and product name, according to some embodiments of the present disclosure.
FIGS. 7A-7D shows lexical similarity-based box plot statistics for product category and product name, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the terms 'item', 'items', 'product', 'products' are interchangeably used throughout the draft and mean the object from a plurality of brands and the same is to be bought by the customer which is available in several other brands to be compared and suggested as an alternative or a substitute when the retailer object is not available for sell.

Although NLP are constantly growing in huge leaps and bounds with their ability to compute words and text, human language is incredibly complex, fluid, and inconsistent and presents serious challenges, especially when product attributes are to be understood from a natural language and to be encoded for a machine to understand. Another challenge caused by using text to represent natural language is the fact that there is no perfect match between words and thoughts. A thought could be expressed in many ways using different possible syntax forms and different words. At the same time, one word could have several meanings. Classical information retrieval systems like typical text-matching search engines are semantically insufficient due to these later challenges. There are different ways to provide complementary information, from unstructured data to structured data. The structuring is usually provided by a metadata that uses tags or keywords chosen by the retailers selling the products. Such techniques that rely upon metadata commonly rely on administrators or others to properly tag or otherwise associate products with metadata, which can be time consuming, expensive, and inaccurate. Because of their reliance on human generated metadata, these conventional techniques can generate inaccurate, ineffective product recommendations that users frequently ignore. Furthermore, such techniques are inflexible and cannot adapt to scenarios where metadata is unavailable.

Suggesting an alternative product similar to a particular product across manufacturers and retailers is a manual process as of now. For example, if a customer is searching for a two-milk carton of 1 liter each from a particular brand and if it is not available at that time, the customer will try to search for a similar product from another brand and purchase the one that closely matches his search. This solution leverages trained methods utilizing artificial intelligence (AI) to do the same. Products are matched based on which category it belongs to and features specific to the category. For example, features of a grocery product such as butter may be fat percentage, flavored or salted etc. Generally, retailers extract the most similar products based on similar/exact product image or by searching with similar product name. However, the current practice of product searching based on product name may not yield the most appropriate match as the product name or image may not include the exact data feed in input and product names may vary across various manufacturers. To address this problem, a solution is required which can retrieve the product details based on lexical and semantic interpretation computation in minimum time possible. A text can be similar lexically or semantically. Lexical similarity means string-based similarity. However, semantic similarity indicates similar meaning among sentence seven they have different words. From this definition the previously proposed approaches can be classified into string-based similarity and semantic similarity. The string based or lexical based similarity approach considers the text as a sequence of character. Calculating similarity depends on measuring similarity between sequences of characters. Many techniques have been proposed in this class of similarity measure. Semantic based similarity which depends on meaning of sentences has different approaches. These approaches adopt different techniques to compare two sentences semantically. The first approach, corpus based, finds the words similarity based on statistical analysis of big corpus. Moreover, deep learning can be used to analyze a large corpus to represent semantics of words. The second approach, knowledge based, depends on handcrafted semantic net for words. The meaning of words and relations between words has been included in this semantic net. The third approach, structure based, uses structure information of a text to get the meaning. Similar text should have similar basic structure.

Retail is the most happening industry where the products are compared with other competitors to stay market relevant and ahead on all related information. In order to identify the best parity and match of the current retailer product, a strong comparison matching algorithm is required that can identify retailer product using its attributes like category and category-specific features, extracting competitor's products similar to retailer's products based on matching attributes and arriving at a solution that aids in doing competitive analysis. Comparing each product of competitor with the retailer product based on a plurality of input features would require large computational time. Hence, a solution is required which can optimize each instance of passing input and generating recommendation based on ranking. Typically, there can be a large number of competitor products as there could be multiple competitors also. So, the number of competitor products can be more than 100k. In this scenario, similarity matching with each would take a long time. Considering the possible pairs of every retailer and competitor product, it can grow exponentially to more than several days to weeks. Therefore, the present disclosure retrieves the most similar alternative product from the competitor with respect to a given input retailer product using a combined processing of the lexical and semantic interpretation of text using a machine learning (ML) model. The ML could easily partite the relevant and approximate product filtration in the same way as humans do. Moreover, the similarity index between the given and searched products could be increased as the number of features fed in input as a part of text increases say for example, nutritional information, allergen, origin country, unit of dimension, packaging description, storage description etc. Each feature fed in input holds specific importance which in turn contributes to associating a value to the output generated. Ranking is done based on weighted score generated by the feature importance associated with the input features which recommend the most similar top n matches of retailer product. For example, given m retailer products and n competitor products. In a typical scenario, for every retailer product it is needed to process every competitor product. This becomes a very large quantity (mn) because typically there are thousands of products. Thus, making the entire process extremely time-consuming and resource intensive. The present disclosure addresses this problem by using efficient retrieval methods. The solution for efficient retrieval helps to fetch these results faster. The optimized methods and use of effective data structures like dictionary and vector stores are used for efficient retrieval.

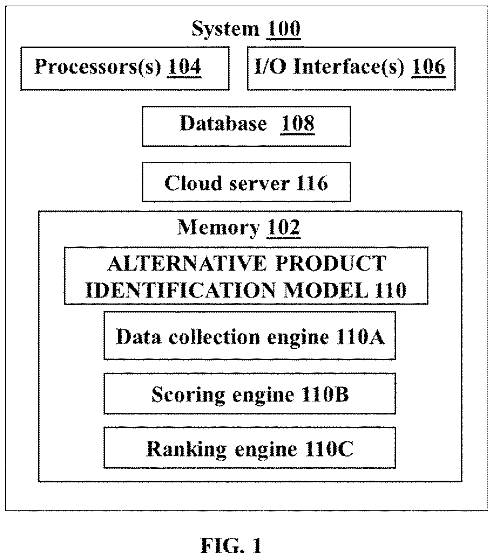

Referring now to the drawings, and more particularly to FIG. 1 through FIG. 7D, where similar reference characters denote corresponding features consistently throughout the figures, there are shown preferred embodiments, and these embodiments are described in the context of the following exemplary system and/or method.

FIG. 1 illustrates an exemplary block diagram of system 100 for identifying alternative product as a recommendation in the absence of the retailer product, according to some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions.

Among other capabilities, the processor(s) are configured to fetch and execute computer-readable instructions stored in the memory. In the context of the present disclosure, the expressions 'processors' and 'hardware processors' may be used interchangeably. In an embodiment, system 100 can be implemented in a variety of computing systems, such as, laptop computers, notebooks, hand-held devices, workstations, mainframe computers, servers, a network cloud, and the like. The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices such as the user terminals enabling user to communicate with system via the chat bot UI or enabling devices to connect with one another or to another server. The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, memory 102 may include a database or repository. Memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. The memory 102, further include an alternative product identification model 110 which comprises a data collection engine 110A, scoring engine 110B ML model. The data collection engine 110A processes data collection and data arrangement. The scoring engine 110B utilizes a machine learning algorithm. The ranking engine 110C performs alternative product recommendation by executing statistical processing of the ML data. System 100 is connected to at least one server that is operable to handle all types of data such as retailer products, competitor products and general miscellaneous content. The data can be stored into a suitable structure that is able to dynamically connect at various levels of granularity and interpretation. A portion of these storage structures can be selected based on an individual pieces of content, such as a retailer product profile, competitor products available, description of products related to quantity, composition, formal groupings, such as taxonomies, market segments, and latent analytical groups that can be used to generate a recommendation or prediction for any other piece of data. System 100 is designed to generate recommendations on the alternative products based on similarity of projected features using textual data obtained from product labels. A comparison is made on the textual data of a retailer product and a competitor product using lexical similarity analysis and semantic similarity analysis. The system 100 recommends products based on lexical and semantic similarity of input text, it avoids issues like population biasness and suggesting out of context matches. The alternative product identification model 110 utilizes a dictionary which comprises of pairs of retailer products and competitor products such that one retailer product having a unique ID is mapped to all other competitor products available in the same domain and are assigned a respective unique ID. Therefore, all the pairs of retailer-competitor products have assigned unique ID combinations. The dictionary is utilized by data collection engine 110A and scoring engine 110B to perform their respective functions. The scoring engine 110B executes machine learning algorithm, specifically, random forest algorithm that belongs to the supervised learning technique. It can be used for both classification and regression problems in ML. It is based on the concept of ensemble learning, which is a process of combining multiple classifiers to solve a complex problem and to improve the performance of the model. Typically, the random forest is a classifier that contains a number of decision trees on various subsets of the given dataset and takes the average to improve the predictive accuracy of that dataset. The random forest algorithm processes the inputs received from lexical similarity analysis and semantic similarity analysis. The memory 102 further includes a plurality of modules (not shown here) comprises programs or coded instructions that supplement applications or functions performed by the system 100 for executing different steps involved in the product ranking and recommendation. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by one or more hardware processors 104, or by a combination thereof. The plurality of modules can include various sub-modules (not shown).

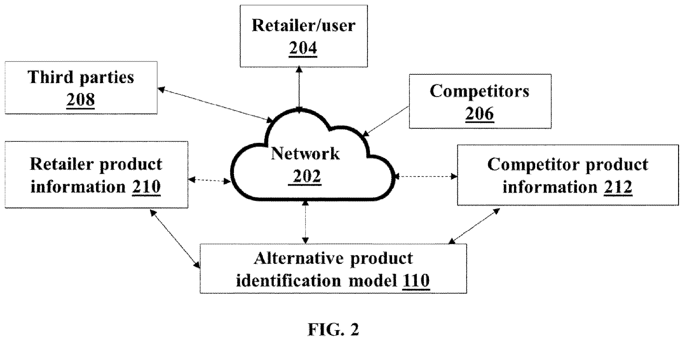

FIG. 2 is a diagram that illustrates an example of the system implemented in a commercial environment with an alternative product identification model 110, according to some embodiments of the present disclosure.

Referring to FIG. 2, there is shown a commercial or retail environment having the alternative product identification model 110. The environment can also include a network 202, retailer 204, competitors 206, third-parties 208, retailer product information 210, and company product information 212. Network 202 enables the various components in the environment to communicate with each other. In one implementation, the retailer product information 210, which can include a wide range of product information for a particular retailer or commercial entity, for example, can communicate with the alternate product recommendation model 110 directly and/or through the network 202. Similarly, the competitor product information 212, which can include a wide range of product information for a particular competitor, for example, can communicate with the alternate product recommendation model 110 directly and/or through the network 202. Retailer 204 can provide information to the alternate product recommendation model 110 and/or access information from the alternate product recommendation model 110 through network 202. Similarly, alternate product recommendation model 110 can obtain information from competitors 206 and/or communicate with third-parties 208 through network 202. Similarly, the alternate product recommendation model 110 can obtain information from competitors 206 and/or communicate with third-parties 208 through the network 110. The information related to the retailer product or the competitor products that is loaded or stored into the alternate product recommendation model 110 can be automatically connected in many dimensions to other information. In some instances, the information from retailer can be connected and can compare itself to the information from another data source (of similar or dissimilar content). The information can represent products from one retailer connecting and comparing themselves to the same or similar products from one or more additional retailers. Any source or information of any source can be connected and compared to any other source or information of any other source. Comparisons are made using all of the data available from both the competitor and the retailer. This will include specific data carried in a product, for example, like title, price, brand, color, description, numerical and technical definitions, packaging, and also include external data that relates to any of the items being compared, such as blogs, reviews, ratings and tagged pictures. In addition, data that is related to the understanding of the product information is also used. For example, one product may use a term or an acronym, while the next product uses descriptions of these terms or acronyms. The alternate product recommendation model 110 can use data that it has learned through associations to these terms, to expand and compare them as they are encountered. In addition, when items are determined to be the same, the characteristics that have been used uniquely from one are then transcribed to the other, making a common definition that can then be used to better understand a third. When connecting one piece of data to another piece of data, alternate product recommendation model 110 can create a dictionary that stores information and can be used to access the data that is being warehoused or stored. Using the dictionary, it may be possible to initially create a pool of items that are likely to map to the input item. The particular terms from the input item and those of the targeted items need not be relied on in every instance because certain items can be expressed using unique terms. By using many different selection dimensions, alternate product recommendation model 110 can substantially guarantee that the items that are to be compared are the ones that are most needed for the comparison. Dictionary stores uniquely related retailer product-competitor product pairs and utilized for machine learning interpretation. This sorts the dataset size and only relevant dataset is given to the machine learning algorithm to process the data. This results in efficient computation in terms of size and time. For example, as an initial selection that would reduce a potential list of competitor products from tens or hundreds of millions of possibilities, one could select (in parallel and results combined) based on brand, technical terms, numbers of a certain size, attribute characteristics, composites of title or description matches, model number, fuzzy interpretations of model numbers, color references, discussion of packaging or refurbishing, bundle identification, and/or accessory identification. These can be done individually and in combination. The results should be a more workable list size of around 50 thousand products, which can then easily be processed in parallel and ranked. Once the list of comparable items has been selected, the alternate product recommendation model 110 can compare each item in the target to the input item, by lexical and semantic manner. The comparison can include the computation of a score that represents the degree of overall comparison, as well as individual numbers that represent the degree of comparison along different lines. For example, a comparison line can be how comparable two items are when only technical terminology is used for the comparison. While the alternate product recommendation model 110 creates its graph connections, it can create semantic dimensions that measure the assortments of products, that is, those with specific levels of similarity across sources.

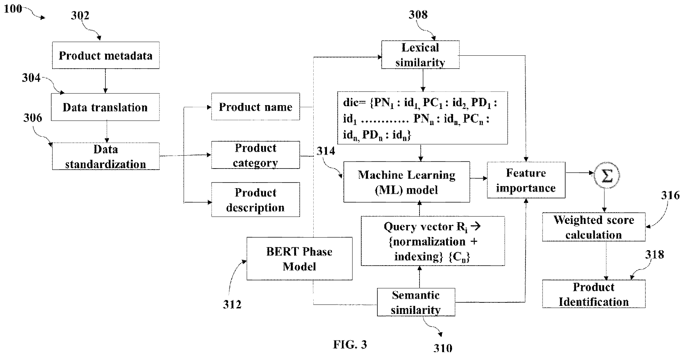

FIG. 3 is a flow diagram illustrating end-to-end pipeline product recommendations by the alternative product identification model comprising a set of ML modules, according to some embodiments of the present disclosure. Referring to FIG. 3, alternative product identification is performed based on similarity analysis with the retailer item. There can be multiple benefits by this analysis. In one instance, the alternative product identification can benefit retailers by performing competitive intelligence to know the competitors working close to their product. In another instance, the alternative product identification can benefit retailers by providing most close substitute item when the retailer item has gone out of stock. This analysis combines dual similarity algorithms to prepare the classification using machine learning model. This results in the most accurate identification of the alternative product. System 100 collects the product metadata 302. The product metadata includes retailer product information as well as competitor product information. The product metadata 302 comprises a plurality of product attributes captured from product label like product name, quantity, category, description of ingredients, usage instructions, packaging date, expiry date, batch number, lot number, images and so on. The system 100 further executes metadata translation 304. Since metadata captured from retailer product and various competitor products collected from different parts of the world, it can be in multiple languages and need to be translated in one language so that further standardization can be performed uniformly across retailer and product metadata. The metadata translation is processed by translation API to translate product information in one language. The translated metadata thus obtained in a uniform language is taken for further processing. Further system 100 executes standardization 306 of translated metadata of the retailer product and the competitor products by segregating product attributes into (a) product name, (b) product category, and (c) product description. The translated metadata of retailer product and the competitor products is standardized to facilitate uniform cataloging of the translated metadata. The system 100 executes pre-processing of the standardized metadata for machine learning by mapping the retailer product with each of the competitor products to create retailer-competitor product pairs. The mapping of the retailer product by linking the retailer product ID with each of the competitor product ID to arrange data with ID-ID mapping. Data classification algorithm then classifies data into positive dataset and negative dataset. The positive dataset comprises the pairs that have lexical similarity between the texts. This kind of pre-processing helps drop-off the data which is not relevant for the machine learning algorithm. Therefore, a filtered dataset comprising only of positive dataset has retailer-competitor product pairs. Due to such filtering, dataset size reduces the execution time and results in efficient computation. Nevertheless, prediction accuracy increases to the greater extent. In the next phase, system 100 calculates lexical similarity 308 of the retailer-competitor product pairs of the filtered dataset. Lexical similarity 308 provides a measure of the similarity of two texts based on the intersection of the word sets of same or different languages. Further, system 100 calculates semantic similarity 310 of the retailer-competitor product pairs of the filtered dataset. Semantic relatedness of texts is computed by comparing the vectors in the space defined by the concepts, for example, using the cosine metrics. Bidirectional Encoder Representations from Transformers (BERT) phrase model 312 is used to calculate semantic similarity between corresponding retailer and competitor products. For the calculation of semantic similarity, effective retrieval of most semantically same attributes is needed. Further, system 100 obtains feature importance scores for each retailer-competitor product pairs using a pre-trained ML model 314, wherein the model combines a Term frequency-inverse document frequency (TFIDF) score, and cosine similarity score associated with each retailer-competitor product pair. To obtain feature importance scores for each retailer-competitor product pairs using a pre-trained ML model 314 that combines the scores of lexical similarity 308 and the semantic similarity 310 associated with each retailer-competitor product pair. The random forest algorithm is used in deriving the feature importance score. In machine learning, feature importance scores are used to determine the relative importance of each feature in a dataset when building a predictive model. Feature importance can provide a way to rank the features based on their contribution to the final prediction. It can be used for feature selection, which is the process of selecting a subset of relevant features for use in building a model, although this might require domain expertise. The scores can be calculated differently depending on the algorithm. Further, system 100 assign weights to the feature importance scores of each retailer-competitor product pair to obtain weighted score 316. Attribute weight assignment is an important part of the alternative product ranking process. Initially the weights are assigned to random value. Then the output is computed with those values in forward projection. The difference between the truth and prediction is considered as the error is calculated based on error function. Then the weights get updated as gradient of error function in the back propagation. Further, system 100 executes normalization of the weighted scores of retailer-competitor product pairs. Normalization involves scaling the feature importance scores of each retailer-competitor product pairs to bring them to a common range. Normalization eliminates the effects of the variation in the scale of the datasets. Finally, system 100 identifies the alternative products by ranking the retailer-competitor product pairs based on normalized scores of each retailer-competitor product pair. Based on weighted score generated at the step 322, the ranking engine 110C arranges the suitable alternative product available in the market which has strong competitive potential.

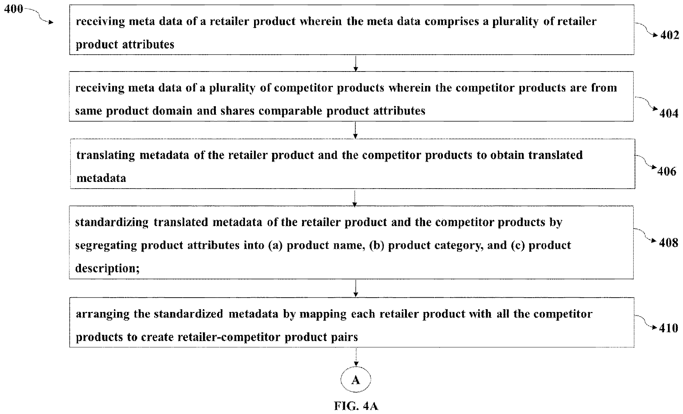

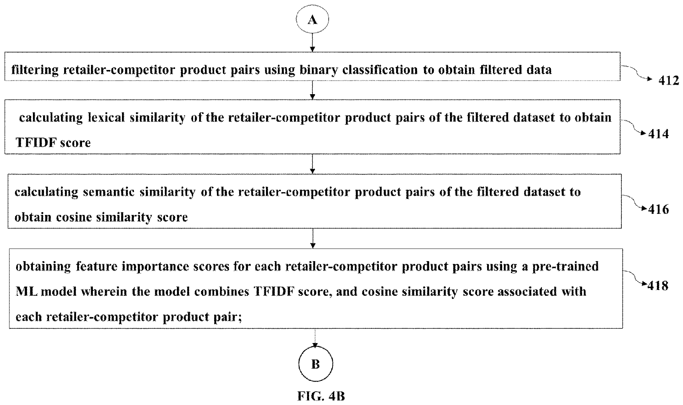

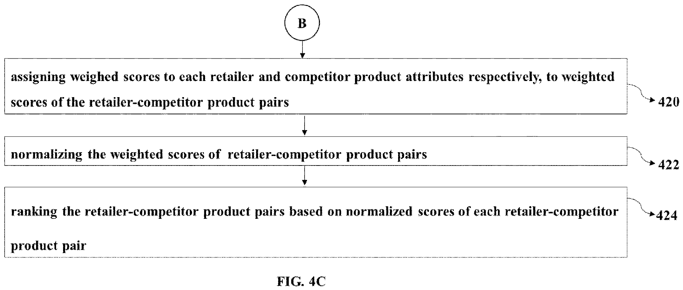

FIGS. 4A-4C shows a flow diagram of an illustrative method 400 for identifying alternative products as a recommendation in the absence of the retailer product, according to some embodiments of the present disclosure.

The steps of method 400 of the present disclosure will now be explained with reference to the components or blocks of the system 100 as depicted in FIG. 1 through FIG. 7D. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. At step 402 of the method 400, the one or more hardware processors 104 are configured to receive, via data collection engine 110A, metadata of a retailer product wherein the metadata comprises a plurality of retailer product attributes. A product label on the product comprises of a variety of information relevant to the product such as product name, quantity, category, description of ingredients, usage instructions, packaging date, expiry date, batch number, lot number, images and so on. This information forms the metadata associated with the respective product and helps identify the product with the metadata. While automating the system that can recommend alternative/ substitute product in the absence of retailer product, metadata of the retailer product becomes critical. Based on metadata of the retailer product, the vast variety of competitor products are scanned to typically identify the closest match. The metadata retrieval of the retailer product can be a manual task or can be automated. At step 404 of method 400, the one or more hardware processors 104 are configured to receive, via data collection engine 110A, metadata of a competitor products wherein the metadata comprises a plurality of competitor product attributes. While selecting the competitor product, the label associated with the competitor products provides basic product information relevant to identify name, category, description, and quantity that are referred while recommending alternative product. The competitor products selected for metadata extraction are taken from same product domain and share comparable product attributes so that more logical comparison can be made before suggesting alternative product. At step 406 of method 400, the one or more hardware processors 104 are configured to translate metadata of the retailer product and the competitor products to obtain translated metadata. Data collection engine 110A executes metadata translation. The metadata can include a vast range of elements, such as the language pairs involved in a project, translation progress statistics, the state of segments and information about translation suggestions. This is a pre-processing step wherein the metadata collected for the retailer product as well as the competitor products is translated in one language to reduce ambiguity which may arise due to different meanings of the same word in different language. In an embodiment, data collection engine 110A utilizes translation APIs to translate product information existing in different languages into one language to make the text uniform. The translated metadata thus obtained in a uniform language is taken for further processing. At step 408 of the method 400, the one or more hardware processors 104 are configured to standardize translated metadata of the retailer product and the competitor products by segregating product attributes into (a) product name, (b) product category, and (c) product description. The translated metadata of retailer product and the competitor products is further standardized to facilitate uniform cataloging of the translated metadata. Data collection engine 110A executes metadata standardization that converts data to a common format to enable users to process and analyze it. The metadata captured from product labels of retailer product and competitor products comes in various formats, under various categories. Such metadata from disparate sources can be problematic if it isn't uniform, leading to difficulties down the line. Standardization establishes clear, consistently defined elements and attributes, providing a comprehensive catalog of the metadata of the retailer product and the competitor products. With the standardization, metadata access to the most relevant product information gets improved. In an embodiment, homogenized data is generated, e.g. converting gm to grams, ltr to liters or vice -versa. Also, it involves text preprocessing for removing punctuation, special characters, text conversion to similar case for better comparison. The entire translated metadata of the retailer product and the competitor products is arranged under three attributes: (a) product name, (b) product category, and (c) product description.

At step 410 of the method 400, the one or more hardware processors 104 are configured to arrange the standardized metadata by mapping the retailer product with each of the competitor product to create retailer-competitor product pairs. The data collection engine 110A enables the mapping of the retailer product by linking the retailer product ID with each of the competitor product ID. The ID-ID mapping results into unique pairs of retailer-competitor product. The mapping results in the creation of a dictionary. The dictionary has a key-value pairing type of arrangement. The unique words in the retailer product standardized metadata under (a) product name, (b) product category, and (c) product description serve as keys and the unique words in the competitor product standardized metadata under (a) product name, (b) product category, and (c) product description serve as value. Suppose retailer product name have words like $w_1, w_2, w_3,...w_n$. Similarly, any of the competitor products also have words like $w_1, w_2, w_3,... ,w_n$. The key-value pairing retrieves only those pairs that have similar key (i.e. words) and value (i.e. words). Let's suppose only competitor product ID 1 has words $w_1$ and $w_2$ which are common in retailer product ID 1. So, it will process further execution only with that particular relevant set of competitors. At step 412 of the method 400, the one or more hardware processors 104 are configured to filter retailer-competitor product pairs using binary classification to obtain filtered data wherein binary classification segregates the retailer-competitor product pairs as (a) positive dataset and (b) negative dataset. Classification divides a set of data into distinct classes. In machine learning and statistics, classification is a supervised learning method in which a computer software learns from data and makes new observations or classifications. Classification problems with two class labels are referred to as binary classification. In most binary classification problems, one class represents the normal condition and the other represents the aberrant condition. In an embodiment, the data collection engine 110A executes binary classification by labelling the retailer-competitor product pairs with positive dataset when the pairs derive word similarity in metadata of the retailer product and the competitor product. Similarly, retailer-competitor product pairs are labelled as negative dataset when the pairs do not derive word similarity in metadata of the retailer product and the competitor product. The filtered dataset obtained through binary classification is processed by discarding the negative dataset. Based on key-value pairing, the retailer-competitor product pairs having word similarity forms a positive dataset and all those retailer-competitor product pairs forms negative dataset when the pairs do not derive word similarity in metadata of the retailer product and the competitor product pairs. Such negative datasets are discarded for further processing. This selection of positive datasets for further processing drastically save the computation time. As the negative dataset is discarded for further processing , this steps serves as a first screening wherein only relevant dataset is taken ahead for further processing. And since positive dataset is provided for the execution of further steps, the method demonstrates more accuracy and precision in providing recommendations. In an embodiment, feature importance score calculation executed on the positive dataset reduced from 20 hours to 24 minutes. At step 414 of method 400, the one or more hardware processors 104 are configured to calculate lexical similarity of the retailer-competitor product pairs of the filtered dataset. Lexical similarity provides a measure of the similarity of two texts based on the intersection of the word sets of same or different languages. A lexical similarity of 1 suggests that there is complete overlap between the vocabularies while a score of 0 suggests that there are no common words in the two texts. For calculating lexical similarity scores, we have optimized the solution by efficient usage of dictionary. This helps to drastically reduce the computation time. The alternative product identification model 110 via scoring engine 110B aims to eliminate those products which do not contribute to results as their score is supposed to be zero. Before processing the retailer-competitor product pairs to derive lexical similarity, metadata filtering is performed as explained in step 412. This reduces overhead execution time and space significantly. Term frequency-inverse document frequency (TF-IDF) is a measure of lexical similarity and is used in the fields of information retrieval (IR) and machine learning, that can quantify the importance or relevance of string representations (words, phrases, lemmas, etc.) in a document amongst a collection of documents (also known as a corpus). TF-IDF can be broken down into two parts TF (term frequency) and IDF (inverse document frequency). Term frequency works by looking at the frequency of a particular term relative to the document. Inverse document frequency looks at how common (or uncommon) a word is amongst the corpuses. IDF is calculated as follows where *t* is the term (word) for which measurement of commonness of and *N* is the number of documents (d) in the corpus (D) is calculated. The denominator is simply the number of documents in which the term, t, appears in. To summarize the key intuition motivating TF-IDF is the importance of a term is inversely related to its frequency across documents. TF gives information on how often a term appears in a document and IDF gives us information about the relative rarity of a term in the collection of documents. By multiplying these values together, we can get our final TF-IDF value. The higher the TF-IDF score the more important or relevant the term is as a term gets less relevant, its TF-IDF score will approach 0. According to an embodiment of the present disclosure, to obtain the TFIDF score for the input features for retailer product as well as competitor products,

consider there are 'n' retailer input say, $X_1$, $X_2$, $X_3$.............$X_n$. and corresponding 'm' competitor input say, $Y_1$, $Y_2$, $Y_3$ .............$Y_m$.

$$\text{Let } L_{S_1}, L_{S_2}, L_{S_3}, \dots \dots \dots L_{S_j} = TFIDF$$

wherein,

$X_1$, $X_2$, $X_3$, ......., $X_n$ = various products in retailer's store, and $Y_1$, $Y_2$, $Y_3$, ......., $Y_n$ = various products in competitor's store. The calculated TFIDF score is based on a list of both products.

At step 416 of method 400, the one or more hardware processors 104 are configured to calculate semantic similarity of the retailer-competitor product pairs of the filtered dataset. The scoring engine 110B executes semantic similarity analysis on the retailer-competitor product pairs of the positive dataset. Semantic relatedness of texts is computed by comparing the vectors in the space defined by the concepts, for example, using the cosine metric. Such a semantic analysis may be explicit in the sense that the manifest concepts may be grounded in human cognition. Because the user input may be received via the user interface as plain text, conventional text classification algorithms may be used to rank the concepts represented by these articles according to their relevance to the given text fragment. A semantic interpreter within the data collection engine 110A may receive an input text fragment T, and represent the fragment as a vector (e.g., using the TFIDF scheme). The semantic interpreter may iterate over the text words, retrieve corresponding entries from the inverted index, and merge them into a weighted vector. Entries of the weighted vector may reflect the relevance of the corresponding concepts to text T. To compute semantic relatedness of a pair of text fragments, their vectors may be compared using, e.g., the cosine metric.

According to an embodiment of the present disclosure, BERT phrase model is used to calculate semantic similarity between corresponding retailer and competitor products. For the calculation of semantic similarity, effective retrieval of most semantically same attributes is needed. Say from total 'n' features of competitor product, 'i' features are queried by Query vector [Retailer feature vector] such that normalization and indexing of competitor feature vector [$C_i$] is done such that for a single instance of Query input [$Q_i$] [retailer features vectors] only the maximum dot product between the two vector [$Q_i$. $C_i$] result is returned. However, with this computational time is restricted by limiting the number of returned values. Semantic similarity is based on a formula presented below:

$$C_{s_1}, C_{s_2}, C_{s_3} \dots \dots \dots C_{s_i} = cosine\ (X_i, Y_i) \text{ for i in } (0,\ m,\ n)$$

wherein,

$C_{s_1}$, $C_{s_2}$, $C_{s_3}$ ........... $C_{s_i}$ = normalized feature vector of each competitor item; and m = $X_i$ and n = $Y_i$.

At step 418 of the method 400, the one or more hardware processors 104 are configured to obtain feature importance scores for each retailer-competitor product pairs using a pre-trained ML model wherein the model combines the TFIDF score, and cosine similarity score associated with each retailer-competitor product pair. To obtain feature importance scores for each retailer-competitor product pairs using a pre-trained ML model that combines lexical similarity, and the semantic similarity score associated with each retailer-competitor product pair. The scoring engine 110B executes the machine learning algorithm to process outcomes of lexical similarity analysis and semantic similarity analysis being performed at steps 414 and 416. In machine learning, feature importance scores are used to determine the relative importance of each feature in a dataset when building a predictive model. These scores are calculated using a variety of techniques, such as decision trees, random forests, linear models, and neural networks. Feature importance can provide a way to rank the features based on their contribution to the final prediction. It can be used for feature selection, which is the process of selecting a subset of relevant features for use in building a model, although this might require domain expertise. The scores can be calculated differently depending on the algorithm. In machine learning, feature importance scores are used to determine the relative importance of each feature in a dataset when building a predictive model. These scores are calculated using a variety of techniques, such as decision trees, random forests, linear models, and neural networks. Some common feature importance scores include feature importance in Random Forest, coefficient in linear regression, and feature importance in XGBoost. Random forest model is used for training the dataset on matched retailer-competitor product pairs and unmatched retailer-competitor products to classify new pairs. The feature importance scores are used to predict by the RF Model to assign weights to all input features. Feature Importance scores that are predicted by the random forest model is used to assign weights to all input features and may be calculated on the basis of Regularization of all input features. According to an embodiment, random forest algorithm is utilized as a machine learning algorithm to receive inputs from lexical similarity calculation and semantic similarity calculation to train the ML model that can process each retailer-competitor product pair with a combined benefit of text based and semantics-based analysis. The random forest is a supervised learning algorithm. The "forest" it builds is an ensemble of decision trees, usually trained with the bagging method. The general idea of the bagging method is that a combination of learning models increases the overall result. For lexical and semantic similarity associated with each of the input features [Product Name, Product Category, Product Description], feature importance score is calculated using Random Forest. Say, $f_1$, $f_2$, $f_3$ ... ... ... ... $f_i$ are feature importance of above calculated lexical similarity (TF-IDF score) and semantic similarity (cosine score) generated by training Random Forest.

At step 420 of the method 400, one or more hardware processors 104 are configured to assign weights to the feature importance scores of each retailer-competitor product pair to obtain weighted score. Attribute weight assignment is an important part of the alternative product ranking process. Initially the weights are assigned to random value. Then the output is computed with those values in forward projection. The difference between the truth and prediction is considered as the error is calculated based on error function. Then the weights get updated as gradient of error function in the back propagation. Hence by this method the model learns the weights based on input features. According to an embodiment, the weighted score is calculated as a normalized feature importance scores of input such as:

Normalized score, $f_i / (f_1 + f_2 + f_3 ....... f_n) = Ns_i$

$$f_i / (f_1 + f_2 + f_3 ...... f_n) = N_{s_i}$$

Weighted score,

$$W_{s_i} = \left( L_{s_1} * N_{s_1} + L_{s_2} * N_{s_2} + \cdots L_{s_i} * N_{s_i} + C_{s_1} * N_{s_1} + C_{s_2} * N_{s_2} + \ldots C_{s_j} * N_{s_i} \right) / T,$$

Wherein,

$$L_{s_1}, L_{s_2}, L_{s_3}, \ldots \ldots, L_{s_i}$$

$$= sum\ of\ lexical\ and\ semantic\ similarities\ of\ each\ feature$$

$N_{s1}$, $N_{s2}$, $N_{s3}$, ......., $N_{si}$ = normalized score of each feature; and $T$ = total features

At step 422 of the method 400, the one or more hardware processors 104 are configured to normalize the weighted scores of retailer-competitor product pairs. The ranking engine 110C of the alternative product identification model 110 executes normalization of the weighted scores of each of the retailer-competitor product pairs. The term "normalization" refers to the scaling down of the data set such that the normalized data falls between 0 and 1. This normalization technique helps compare corresponding normalized values from two or more data sets. The ranking engine 110C executes data normalization by scaling the feature importance scores of each retailer-competitor product pairs to bring them to a common range. Normalization eliminates the effects of the variation in the scale of the datasets, i.e., a data set with large values can be easily compared with a data set with smaller values. In a dataset in which there are multiple numeric variables, each with a different scale, normalization helps to scale all variables so that their variations fall in the range of 0 to 1. The equation for normalization is derived by initially deducting the minimum value from the variable to be normalized. Next, the minimum value subtracts from the maximum value, and the previous result is divided by the latter. Normalized values can be calculated using this formula,

$$z_i = \frac{x_i - \min(x)}{\max(x) - \min(x)}$$

The above formula is used to calculate normalized values for each instance of the data.

At step 424 of the method 400, the one or more hardware processors 104 are configured to identify the alternative products by ranking the retailer-competitor product pairs based on normalized scores of each retailer-competitor product pair. Based on weighted score generated at the step 422, the ranking engine 110C arranges the suitable alternative product available in the absence of the retailer product. Therefore, the system 100 makes recommendation of available competitor product that draws closer similarity with the retailer product wherein product attributes of the retailer product and competitor product are compared with at most sophistication as a combined output of the lexical similarity and semantic similarity. USE CASE-I:

IDENTIFICATION OF ALTERNATIVE PRODUCTS FROM COMPETITIORS FOR A RETAILER PRODUCT

An example scenario depicting the method of identifying alternative products from competitors which are similar to a retailer product performed by the disclosed system 100 for the retailer operating in grocery domain is described below. Recognition of packaging tasks using standard supervised machine learning is difficult because the observed data vary considerably depending on the number of items to pack, the size of the items, and other parameters. Identifying alternative or a substitute item from vast number of competitors is a challenging task. It further becomes difficult as within the same product of one competitor there will be variation in type, packaging size, flavor etc. leading to enormous product to compare to find the suitable alternative. System 100 is given a task to find alternative/ close match against ESL whole milk 3.5% in one liter pack. The alternative identification module 110 processes the input query and output the top four matches using method of the present disclosure shown in Table-1 below:

Table-1

| Retailer category | Competitor category | Retailer item name | Competitor item name |
|---|---|---|---|
| dairy | milk products | esl whole milk 3.5% 1l | carinthian milk whole milk 3.5% 1-liter pack (disposable) |
| dairy | milk products | esl whole milk 3.5% 1l | tyrol milk whole milk 3.5% 1-liter pack (disposable) |
| dairy | milk products | esl whole milk 3.5% 1l | carinthian milk full milk 3.5% 0.5-liter pack (disposable) |
| Dairy | milk products | esl whole milk 3.5% 1l | pinzgau milk mountain farmers full milk longer fresh 3.5% fat 1l 1 liter pack (disposable) |

As presented in Table-1, retailer category and competitor category fetch the exact description from the product label. In-depth description of product name of the retailer product is provided including milk type, milk percentage, and quantity. Similarly, description of product name of the retailer product is provided including milk type, milk percentage, quantity and even packaging type. The result is provided to the retailer as the four top matching products recommended as an alternative to the retailer's product.

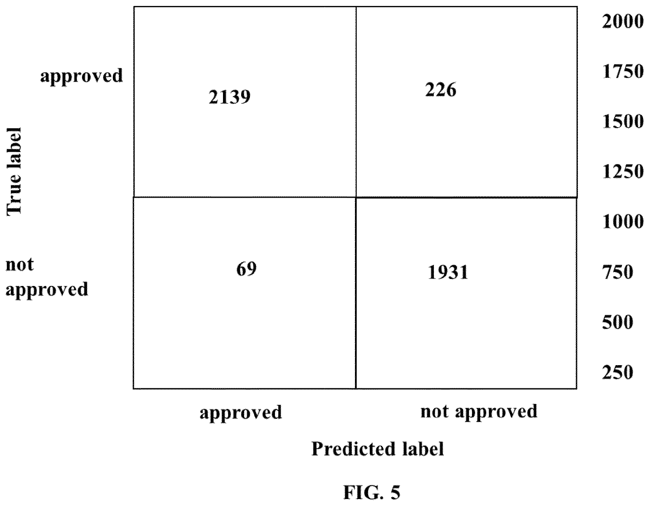

To validate the results of the query processed by the alternative identification module 110, the top four matches have been identified manually using conventional tools. The dataset prepared using a vast number of competitor products is analyzed using confusion matrix. The confusion matrix is based on random forest algorithm. And it is utilized here to derive the feature importance of score utilizing inputs of lexical similarity and semantic similarity. The confusion matrix is created to analyze around 4000 competitor products. The competitor products are mapped to the retailer product as per the query and the retailer-competitor pairs are taken for classification by the random forest algorithm. Based on the output of the random forest, predicted labels and true labels of approved products and non-approved products are distributed in the respective quadrants of the confusion matrix as shown in FIG. 5. The approved products are those which are in consensus with the manual results. The non-approved products are those which are wrongly predicted. From the confusion matrix distribution, it is concluded that the prediction accuracy of the method of the present disclosure agrees with the manual results. Therefore, system 100 successfully predicted the alternative competitor products against the retailer product queried by the retailer.

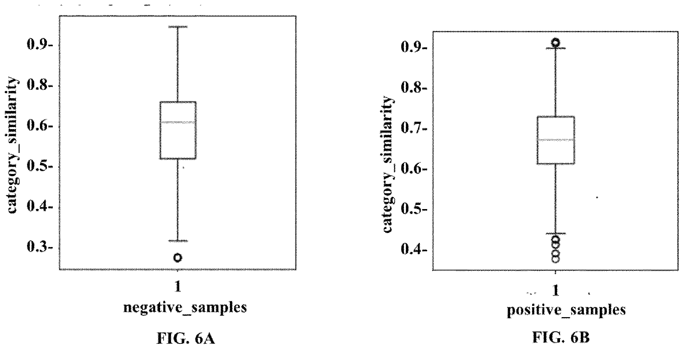

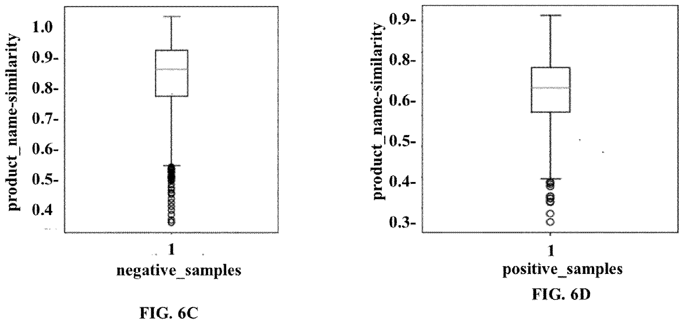

Further, box plot statistics are studied for deriving semantic similarity in product category and semantic similarity in product name (shown in FIGS. 6A-6D). FIG. 6A shows box plot for semantic analysis of negative sample with minimum and maximum range of 0.4 to 0.95 and median 0.7. The median value defines the maximum acceptable limit for considering prediction accuracy. And data points outside the range are considered as outliers. FIG. 6B shows box plot for semantic analysis of positive sample with minimum and maximum range of 0.32 to 0.9 and median 0.6. FIG. 6C shows box plot for semantic analysis of positive sample with minimum and maximum range of 0.55 to 0.1 and median 0.85. And FIG. 6D shows box plot for semantic analysis of positive sample with minimum and maximum range of 0.4 to 0.9 and median 0.65.

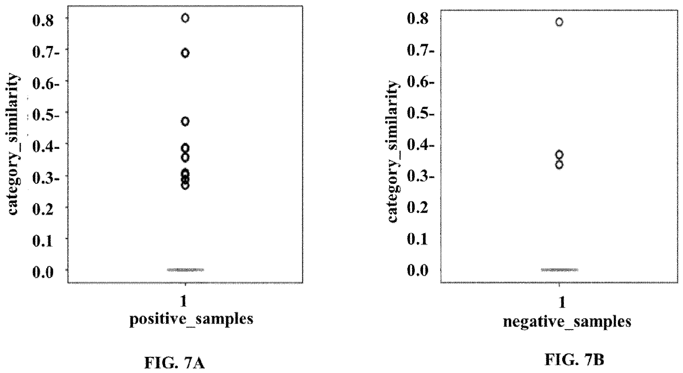

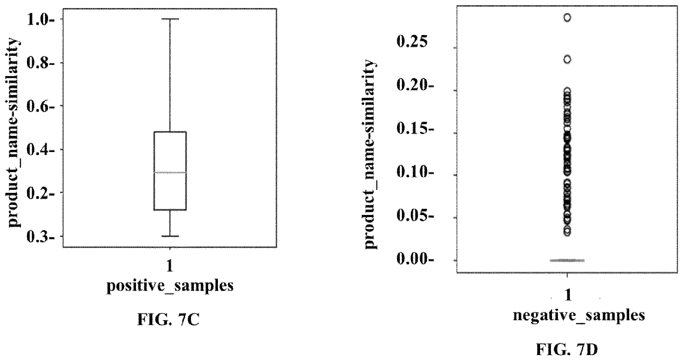

Similarly, box plot statistics are studied for deriving lexical similarity in product category and lexical similarity in product name (shown in FIGS. 7A-7D). FIG. 7A shows box plot for lexical analysis of positive sample with outliers ranging from 0.25 to 0.8. FIG. 7B shows box plot for lexical analysis of negative sample with outliers ranging from 0.3 to 0.7. FIG. 7C shows box plot for lexical analysis of positive sample with minimum and maximum range of 0 to 0.1 and median 0.3. And FIG. 7D shows box plot for lexical analysis of negative sample outliers ranging from 0 to 0.3. Therefore, based on analysis of semantic similarity and lexical similarity it is concluded that the system accurately predicts the competitor products for the retailer product by understanding category of the product, its features like description, usage and any other important feature.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein addresses unresolved problem of identifying competitor products which draws closer similarity to the retailer product. Utilizing a combination of lexical similarity and semantic similarity, more context-aware identification of the alternative products from the competitors can be made. The method of the present disclosure processes the metadata by mapping retailer product with each of the competitor products available in the domain in which the comparison is sought. This results in unique retailer-competitor product pairs. While scanning the unique retailer-competitor product pairs, only those pairs are taken forward which drew a lexical match between retailer product and the competitor product in the pair. Filtered data is then given as input to the machine learning algorithm that estimates feature importance score. Filtered data input not only accelerates the computation but also results in higher prediction accuracy. The method disclosed in the present system is helpful in conducting competitive intelligence wherein product comparison is just not made on the basis of product name, but other minute information that are captured from product labels as metadata such as product category, product description and other product specific attributes are utilized in conducting analysis. The supervised machine learning model processes the input received from lexical similarity and semantic similarity to extract feature importance scores of each pair of retailer product and the competitor product. Therefore, the disclosed method and system is beneficial to the retailer from being more informed about competitor products. Also, the method and system can help customers identify most suitable alternative identified by the system based on detailed analysis of the metadata.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in

**EP 4 617 985 A1**

meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (400) of identifying alternative products, the method comprising steps:

   receiving (402), via one or more hardware processors, metadata of a retailer product, wherein the metadata comprises a plurality of retailer product attributes obtained from a product label for a domain of interest;
   receiving (404), via the one or more hardware processors, metadata of a plurality of competitor products from the domain with product attributes comparable to the plurality of retailer product attributes;
   translating (406), via the one or more hardware processors, metadata of the retailer product and the competitor products to obtain translated metadata comprising a plurality of product attributes;
   standardizing (408), via the one or more hardware processors, the translated metadata of the retailer product and the plurality of competitor products by segregating the product attributes into (a) a product name, (b) a product category, and (c) a product description;
   arranging (410), via the one or more hardware processors, the standardized metadata by mapping each of the retailer product with each of the plurality of competitor product to create a plurality of retailer-competitor product pairs;
   filtering (412), via the one or more hardware processors, the plurality of retailer-competitor product pairs using binary classification to obtain filtered data, wherein binary classification segregates the plurality of retailer-competitor product pairs as (a) a positive dataset and (b) a negative dataset;
   calculating (414), via the one or more hardware processors, a lexical similarity of each of the plurality of retailer-competitor product pairs of the filtered dataset to obtain a Term frequency-inverse document frequency (TFIDF) score;
   calculating (416), via the one or more hardware processors, semantic similarity of the retailer-competitor product pairs of the filtered dataset to obtain cosine similarity score;
   computing (418), via the one or more hardware processors, feature importance scores for each of the plurality of retailer-competitor product pairs using a pre-trained ML model, wherein the model combines the lexical similarity score, and the semantic similarity score associated with each of the plurality of retailer-competitor product pair to obtain weighted scores of each of the plurality of attributes associated with the plurality of retailer- competitor pairs;
   assigning (420), via the one or more hardware processors, the weighted scores to each of the plurality of retailer product attributes and each of the of the plurality of competitor product attributes to obtain combined weighted scores of the retailer-competitor product pairs;
   normalizing (422), via the one or more hardware processors, the combined weighted scores of the retailer-competitor product pairs; and
   identifying (424), via the one or more hardware processors, a plurality of alternative products for the retailer product by ranking the retailer-competitor product pairs based on the normalized scores of each of the retailer-competitor product pair.

2. The method as claimed in claim 1, wherein the retailer-competitor product pairs formed by mapping the standardized metadata are stored in a back-end dictionary, and wherein the lexical similarity calculation receives input from the dictionary to process the feature importance score.

3. The method as claimed in claim 1, wherein the binary classification segregates the retailer-competitor product pairs as:

(a) the positive dataset when the pairs derive word similarity in metadata of the retailer product and the competitor product, and
(b) the negative dataset when the pairs do not derive word similarity in metadata of the retailer product and the competitor product; and

wherein the filtered dataset obtained through binary classification is processed by discarding the negative dataset.

4. The method as claimed in claim 1, wherein data standardization categorizes the retailer product and competitor products within same parameters to obtain homogenous classification.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive metadata of a retailer product, wherein the metadata comprises a plurality of retailer product attributes obtained from a product label for a domain of interest;
receive metadata of a plurality of competitor products from the domain with product attributes comparable to the plurality of retailer product attributes;
translate metadata of the retailer product and the competitor products to obtain translated metadata comprising a plurality of product attributes;
standardize the translated metadata of the retailer product and the plurality of competitor products by segregating the product attributes into (a) a product name, (b) a product category, and (c) a product description;
arrange the standardized metadata by mapping each of the retailer product with each of the plurality of competitor product to create a plurality of retailer-competitor product pairs;
filter the plurality of retailer-competitor product pairs using binary classification to obtain filtered data, wherein binary classification segregates the plurality of retailer-competitor product pairs as (a) a positive dataset and (b) a negative dataset;
calculate lexical similarity of each of the plurality of retailer-competitor product pairs of the filtered dataset to obtain a Term frequency-inverse document frequency (TFIDF) score;
calculate semantic similarity of the retailer-competitor product pairs of the filtered dataset to obtain cosine similarity score;
compute feature importance scores for each of the plurality of retailer-competitor product pairs using a pre-trained ML model, wherein the model combines the lexical similarity score, and the semantic similarity score associated with each of the plurality of retailer-competitor product pair to obtain weighted scores of each of the plurality of attributes associated with the plurality of retailer- competitor pairs;
assign the weighted scores to each of the plurality of retailer product attributes and each of the plurality of competitor product attributes to obtain combined weighted scores of the retailer-competitor product pairs;
normalize the combined weighted scores of the retailer-competitor product pairs; and
identify a plurality of alternative products for the retailer product by ranking the retailer-competitor product pairs based on the normalized scores of each of the retailer-competitor product pair.

6. The system as claimed in claim 5, wherein the retailer-competitor product pairs formed by mapping the standardized metadata are stored in a back-end dictionary, and wherein the lexical similarity calculation receives input from the dictionary to process the feature importance score.

7. The system as claimed in claim 5, wherein the binary classification segregates the retailer-competitor product pairs as:

(a) the positive dataset when the pairs derive word similarity in metadata of the retailer product and the competitor product, and
(b) the negative dataset when the pairs do not derive word similarity in metadata of the retailer product and the competitor product; and

wherein the filtered dataset obtained through binary classification is processed by discarding the negative dataset.

8. The system as claimed in claim 5, wherein data standardization categorizes the retailer product and competitor products within same parameters to obtain homogenous classification.

9. One or more non-transitory machine-readable information storage mediums comprising one or more instructions which when executed by one or more hardware processors cause:

receiving metadata of a retailer product, wherein the metadata comprises a plurality of retailer product attributes obtained from a product label for a domain of interest;
receiving metadata of a plurality of competitor products from the domain with product attributes comparable to the plurality of retailer product attributes;
translating metadata of the retailer product and the competitor products to obtain translated metadata comprising a plurality of product attributes;
standardizing the translated metadata of the retailer product and the plurality of competitor products by segregating the product attributes into (a) a product name, (b) a product category, and (c) a product description;
arranging the standardized metadata by mapping each of the retailer product with each of the plurality of competitor product to create a plurality of retailer-competitor product pairs;
filtering the plurality of retailer-competitor product pairs using binary classification to obtain filtered data, wherein binary classification segregates the plurality of retailer-competitor product pairs as (a) a positive dataset and (b) a negative dataset;
calculating lexical similarity of each of the plurality of retailer-competitor product pairs of the filtered dataset to obtain a Term frequency-inverse document frequency (TFIDF) score;
calculating semantic similarity of the retailer-competitor product pairs of the filtered dataset to obtain cosine similarity score;
computing feature importance scores for each of the plurality of retailer-competitor product pairs using a pre-trained ML model, wherein the model combines the lexical similarity score, and the semantic similarity score associated with each of the plurality of retailer-competitor product pair to obtain weighted scores of each of the plurality of attributes associated with the plurality of retailer- competitor pairs;
assigning the weighted scores to each of the plurality of retailer product attributes and each of the of the plurality of competitor product attributes to obtain combined weighted scores of the retailer-competitor product pairs;
normalizing the combined weighted scores of the retailer-competitor product pairs; and
identifying a plurality of alternative products for the retailer product by ranking the retailer-competitor product pairs based on the normalized scores of each of the retailer-competitor product pair.

10. The one or more non-transitory machine-readable information storage mediums as claimed in claim 9, wherein the retailer-competitor product pairs formed by mapping the standardized metadata are stored in a back-end dictionary, and wherein the lexical similarity calculation receives input from the dictionary to process the feature importance score.

11. The one or more non-transitory machine-readable information storage mediums as claimed in claim 9, wherein the binary classification segregates the retailer-competitor product pairs as:

(a) the positive dataset when the pairs derive word similarity in metadata of the retailer product and the competitor product, and
(b) the negative dataset when the pairs do not derive word similarity in metadata of the retailer product and the competitor product; and

wherein the filtered dataset obtained through binary classification is processed by discarding the negative dataset.

12. The one or more non-transitory machine-readable information storage mediums as claimed in claim 9, wherein data standardization categorizes the retailer product and competitor products within same parameters to obtain homogenous classification.

System **100**

Processors(s) **104**    I/O Interface(s) **106**

Database **108**

Cloud server 116

Memory **102**

ALTERNATIVE PRODUCT
IDENTIFICATION MODEL 110

Data collection engine 110A

Scoring engine 110B

Ranking engine 110C

FIG. 1

Retailer/user
204

Third parties
208

Competitors
206

Retailer product
information 210

Network
202

Competitor product
information 212

Alternative product
identification model 110

FIG. 2

100

302

**Product metadata**

304

**Data translation**

306

**Data standardization**

**Product name**

**Product category**

**Product description**

314

**BERT Phase Model**

312

308

**Lexical similarity**

dic= {PN$_1$ : id$_1$, PC$_1$ : id$_2$, PD$_1$ : id$_1$ ............ PN$_n$ : id$_n$, PC$_n$ : id$_n$, PD$_n$ : id$_n$}

**Machine Learning (ML) model**

**Feature importance**

**Query vector R$_i$ → {normalization + indexing} {C$_n$}**

**Semantic similarity**

312

310

Σ

316

**Weighted score calculation**

318

**Product Identification**

FIG. 3

20

400

receiving meta data of a retailer product wherein the meta data comprises a plurality of retailer product attributes

→ 402

receiving meta data of a plurality of competitor products wherein the competitor products are from same product domain and shares comparable product attributes

→ 404

translating metadata of the retailer product and the competitor products to obtain translated metadata

→ 406

standardizing translated metadata of the retailer product and the competitor products by segregating product attributes into (a) product name, (b) product category, and (c) product description;

→ 408

arranging the standardized metadata by mapping each retailer product with all the competitor products to create retailer-competitor product pairs

→ 410

A

FIG. 4A

$\boxed{A}$

filtering retailer-competitor product pairs using binary classification to obtain filtered data → 412

calculating lexical similarity of the retailer-competitor product pairs of the filtered dataset to obtain TFIDF score → 414

calculating semantic similarity of the retailer-competitor product pairs of the filtered dataset to obtain cosine similarity score → 416

obtaining feature importance scores for each retailer-competitor product pairs using a pre-trained ML model wherein the model combines TFIDF score, and cosine similarity score associated with each retailer-competitor product pair; → 418

$\boxed{B}$

FIG. 4B

B

assigning weighed scores to each retailer and competitor product attributes respectively, to weighted scores of the retailer-competitor product pairs → 420

normalizing the weighted scores of retailer-competitor product pairs → 422

ranking the retailer-competitor product pairs based on normalized scores of each retailer-competitor product pair → 424

**FIG. 4C**

FIG. 5

FIG. 6A

FIG. 6B

**FIG. 6C**

**FIG. 6D**

FIG. 7A

FIG. 7B

FIG. 7C

FIG. 7D

Europäisches
Patentamt

European
Patent Office

Office européen
des brevets

# EUROPEAN SEARCH REPORT

**Application Number**

EP 25 16 2481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/136549 A1 (SURYA SIVA KALYANA PAVAN KUMAR MALLAPRAGADA NAGA [US] ET AL) 15 May 2014 (2014-05-15)<br>* paragraph [0002] - paragraph [0004] *<br>* paragraph [0019] - paragraph [0020] *<br>* paragraph [0023] - paragraph [0027] *<br>* paragraph [0032] - paragraph [0034] *<br>* paragraph [0037] - paragraph [0038] *<br>* paragraph [0041] - paragraph [0042] *<br>* paragraph [0052] *<br>- - - - - | 1-12 | INV.<br>G06Q30/0201<br>G06Q30/0601 |
| Y | RISTOSKI PETAR ET AL: "A machine learning approach for product matching and categorization : Use case: Enriching product ads with semantic structured data",<br>SEMANTIC WEB,<br>vol. 9, no. 5, 27 August 2018 (2018-08-27), pages 707-728, XP093275513,<br>ISSN: 1570-0844, DOI: 10.3233/SW-180300<br>* abstract *<br>* page 2, column 1 *<br>* page 4, column 1 - column 2 *<br>* page 5, column 2 *<br>* page 7, column 2 - page 8, column 1 *<br>* page 9, column 2 - page 10, column 2 *<br>* page 15, column 1 *<br>* tables 5, 6 *<br>- - - - - | 1-12 | |

TECHNICAL FIELDS
SEARCHED (IPC)

G06Q

The present search report has been drawn up for all claims

| Place of search | Date of completion of the search | Examiner |
|---|---|---|
| Munich | 8 May 2025 | Bharucha, Zubin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 2481

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | Publication date | Patent family member(s) | | Publication date |
|---|---|---|---|---|
| US 2014136549 A1 | 15-05-2014 | CA | 2833357 A1 | 14-05-2014 |
| | | MX | 368777 B | 16-10-2019 |
| | | US | 2014136549 A1 | 15-05-2014 |
| | | US | 2020285681 A1 | 10-09-2020 |
| | | US | 2025131050 A1 | 24-04-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421017957